# EUROPEAN PATENT SPECIFICATION

(11) **EP 2 944 118 B1**
(45) Date of publication and mention of the grant of the patent: **05.06.2019**
(21) Application number: 13826792.7
(22) Date of filing: 30.12.2013
(51) Int. Cl.: H04W 36/14

(54) **VERTICAL HAND OVER SCENARIOS CONSIDERING APPLICATION MOBILITY**
VERTIKALE WEITERREICHUNGSSZENARIOS UNTER BERÜCKSICHTIGUNG EINER ANWENDUNGSMOBILITÄT
SCÉNARIOS DE TRANSFERT VERTICAL PRENANT EN CONSIDÉRATION LA MOBILITÉ D'APPLICATION

(30) Priority: 08.01.2013 US 201361749949 P
(43) Date of publication of application: 18.11.2015
(73) Proprietor: Telefonaktiebolaget LM Ericsson (publ), 164 83 Stockholm (SE)
(72) Inventor: TEYEB, Oumer, S-177 44 Solna (SE); VIKBERG, Jari, S-153 38 Järna (SE); WANG, Yu, S-169 74 Solna (SE); MILDH, Gunnar, S-192 55 Sollentuna (SE)
(74) Representative: Brann AB
(86) International application number: PCT/SE2013/051628
(87) International publication number: WO 2014/109695

(56) References cited:
- EP-A2- 1 915 014
- US-A1- 2003 193 910
- US-A1- 2008 096 560
- DE LA OLIVA A ET AL: "An overview of IEEE 802.21: media-independent handover services", IEEE WIRELESS COMMUNICATIONS, IEEE SERVICE CENTER, PISCATAWAY, NJ, US, vol. 15, no. 4, 1 August 2008 (2008-08-01) , pages 96-103, XP011233039, ISSN: 1536-1284, DOI: 10.1109/MWC.2008.4599227

## Description

### TECHNICAL FIELD

Embodiments herein relate to a radio node, a wireless terminal, methods therein, a computer program and a computer readable storage medium for handling a mobility process of the user equipment.

### BACKGROUND

In today's wireless telecommunications networks a number of different technologies are used, such as Long Term Evolution (LTE), LTE-Advanced, 3rd Generation Partnership Project (3GPP) Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible technologies. A wireless telecommunications network comprises radio base stations providing radio coverage over at least one respective geographical area forming a cell. User equipments (UE) or wireless terminals are served in the cells by the respective radio base station and are communicating with respective radio base station. The user equipments transmit data over a radio interface to the radio base stations in uplink (UL) transmissions and the radio base stations transmit data to the user equipments in downlink (DL) transmissions.

A Universal Mobile Telecommunications System (UMTS) is a third generation mobile communication system, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In a forum known as the Third Generation Partnership Project (3GPP), telecommunications suppliers propose and agree upon standards for third generation networks and UTRAN specifically, and investigate enhanced data rate and radio capacity. In some versions of the RAN as e.g. in UMTS, several base stations may be connected, e.g., by landlines or microwave, to a controller node, such as a radio network controller (RNC) or a base station controller (BSC), which supervises and coordinates various activities of the plural base stations connected thereto. The RNCs are typically connected to one or more core networks.

Specifications for the Evolved Packet System (EPS) have been completed within the 3^{rd} Generation Partnership Project (3GPP) and this work continues in the coming 3GPP releases. The EPS comprises the Evolved Universal Terrestrial Radio Access Network (E-UTRAN), also known as the Long Term Evolution (LTE) radio access, and the Evolved Packet Core (EPC), also known as System Architecture Evolution (SAE) core network. E-UTRAN/LTE is a variant of a 3GPP radio access technology wherein the radio base station nodes are directly connected to the EPC core network rather than to RNCs. In general, in E-UTRAN/LTE the functions of a RNC are distributed between the radio base stations nodes, e.g. eNodeBs in LTE, and the core network. As such, the Radio Access Network (RAN) of an EPS has an essentially "flat" architecture comprising radio base station nodes without reporting to RNCs.

Mobile operators are today mainly using Wi-Fi to offload traffic from the mobile networks but the opportunity to improve end user, such as a user of a wireless terminal, experience regarding performance is also becoming more important. The current Wi-Fi deployments, which are networks connecting wireless terminals to a core network in an unlicensed frequency spectrum, are mainly totally separate from mobile networks, and are to be seen as non-integrated. The usage of Wi-Fi is mainly driven due to the free and wide unlicensed spectrum, and the increased availability of Wi-Fi in mobile terminals like smartphones and tablets. The end users are also becoming more and more at ease with using Wi-Fi for example at offices and homes.

The different business segments for Wi-Fi regarding integration possibilities may be divided into mobile operator hosted/controlled vs. 3^{rd} party hosted/controlled Wi-Fi Access Points (AP), here 3rd party is seen as anything else than mobile operator and that the 3rd party is not totally "trusted" by the mobile operator. 3rd party may be for example a Wi-Fi operator or an end-user him/herself. In both segments there exist public or hotspot, enterprise and residential deployments.

### Wi-Fi integration into mobile core network

Wi-Fi integration towards the mobile core network is emerging as a good way to improve the end user experience further. These solutions mainly comprise: common authentication between 3GPP and Wi-Fi, and integration of Wi-Fi user plane traffic to the mobile core network. The common authentication is based on automatic SIM-based authentication in both access types. The Wi-Fi user plane integration provides the mobile operator the opportunity to provide the same services, like parental control and subscription based payment methods, for wireless terminals of the end users when connected both via 3GPP and via Wi-Fi. Different solutions are standardized in 3GPP: Overlay solutions, S2b, S2c, are specified since 3GPP Release 8 (Rel-8) while integration solutions, S2a, are currently work-in-progress, S2a, S2b, S2c indicating the 3GPP interface or reference point name towards the Packet Data Network - Gateway (PDN-GW). These solutions are specified in 3GPP TS 23.402 version 11.5.0.

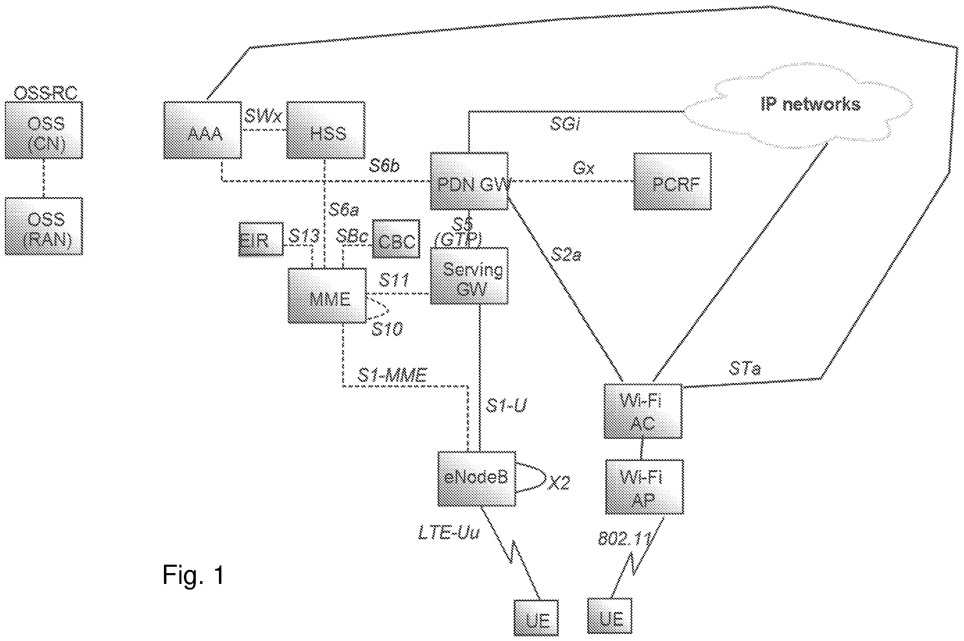

**Figure 1** shows a network architecture for E-UTRAN and EPC and how a eNodeB (eNB) is connected via interfaces such as S1-interfaces, S1-MME and S1-U to the Mobility Managing Entity (MME) and Serving Gateway (GW) respectively. It also shows how the Wi-Fi access network, i.e. Wi-Fi Access Point (AP) and Wi-Fi Access Control (AC), is connected to the PDN-GW via an S2a interface and to a 3GPP Authentication Authorization and Accounting (AAA) Server via a STa interface. PDN-GW is connected to the Wi-Fi AC via an S2a interface, and to the Policy and Charging Rule Functions via a Gx interface. The PDN-GW is further connected to IP networks via an SGi interface. The Serving GW is connected to the PDN GW over a S5 interface (GTP). The MME is connected to an Equipment Identity Register (EIR) via a S13 interface, and to a Cell Broadcast Centre (CBC) via a SBc interface. The MME communicates with the Serving GW over S11 interface and to other MMEs over a S10 interface. The MME is connected to a Home Subscriber Server (HSS) via an S6a interface. The HSS is connected to the AAA server over a SWx interface and the AAA server is connected to the PDN GW over a S6b interface. A UE is connected to the eNodeB over a LTE-Uu interface and a UE is connected to the Wi-Fi AP via a 802.11 interface. Furthermore, an Operation Support System for Radio & Core (OSS-RC) is shown comprising an OSS Core network (CN) and an OSS Radio Access Network (RAN).

It should be noted that the configuration of the Wi-Fi network shown in Figure 1 is only an illustrative example and that the Wi-Fi network may be configured or arranged in several other ways and may comprise several further network nodes or entities. For example, the Wi-Fi network may also include a Broadband Network Gateway (BNG). In another example, the Wi-Fi AP may be co-located with a Residential Gateway (RG). In a further example, the Wi-Fi network may also comprise a Trusted WLAN Access Gateway (TWAG). In addition, the interface between the Wi-Fi AC and the PDN GW, i.e. the S2a interface, may also be implemented between the PDN GW and for example either the BNG or the RG.

### Wi-Fi integration into radio access network

Wi-Fi integration into Radio Access Network (RAN) is also emerging as an interesting study object. There are basically two different possible levels that could be implemented either separately or together. A first level of integration is to combine both 3GPP and Wi-Fi in the small pico base stations to gain access to the Wi-Fi sites with 3GPP technology and vice versa. The second level of integration is to integrate the Wi-Fi access tighter into the RAN by introducing enhanced network controlled traffic steering between 3GPP and Wi-Fi based on knowledge about the total situation on the different accesses.

The driver for this second level of integration is to avoid potential issues with UE controlled Wi-Fi selection such as selecting Wi-Fi when the Wi-Fi connection is bad or when the UE is moving, thus giving better end user performance and better utilization of the combined Wi-Fi and cellular radio network resources.

The current methods for integration of Wi-Fi into 3GPP network described earlier do not offer good support for network controlled Wi-Fi / 3GPP access selection and service mapping taking into consideration of radio access related input parameters such as UE mobility, 3GPP/Wi-Fi cell and network load, radio link performance etc.

EP1915014 discloses a method for deciding a handover of a mobile terminal based on context information in a network environment. XP011233039 [A. de la Oliva et al., "An overview of IEEE 802.21: Media-Independent Handover Services", IEEE Wireless Communications, Volume 15, Issue 4 (2008), pp. 96-1031 discloses a framework that allows higher levels to interact with lower layers to provide session continuity without dealing with specifics of each technology.

### SUMMARY

An object of embodiments herein is to provide a mechanism that enhances performance of a wireless terminal during a mobility process between a first access network and a second access network.

The invention is defined by the independent claims. According to an aspect, the object is achieved by a method in a radio node for handling mobility, between a first access network and a second access network, of a wireless terminal. The radio node collects information of an on-going application or service for the wireless terminal. The radio node retrieves information whether the on-going application or service supports application or service mobility, comprising an Internet Protocol address change. The radio node further decides to initiate or allow a mobility process, between the first access network and the second access network, of the wireless terminal based on retrieved information.

According to another aspect the object is achieved by a method in a wireless terminal for handling mobility, between a first access network and a second access network, of the wireless terminal. The wireless terminal collects information of an on-going application or service for the wireless terminal. The wireless terminal retrieves information whether the on-going application or service supports application or service mobility, comprising an Internet Protocol address change. The wireless terminal further decides whether to initiate a mobility process, between the first access network and the second access network, of the wireless terminal based on retrieved information.

According to yet another aspect the object is achieved by a method in a network database for enabling mobility, between a first access network and a second access network, of a wireless terminal. The network database provides a radio node or the wireless terminal with information whether an application or service supports application or service mobility, comprising an Internet Protocol address change. The information is to be used when determining whether to initiate or to allow a mobility process, between the first access network and the second access network, of the wireless terminal based on retrieved information.

According to still another aspect the object is achieved by a radio node for handling mobility, between a first access network and a second access network, of a wireless terminal. The radio node comprises a processing circuit configured to collect information of an on-going application or service for the wireless terminal. The processing circuit is further configured to retrieve information whether the on-going application or service supports application or service mobility, comprising an Internet Protocol address change. The processing circuit is furthermore configured to decide to initiate or allow a mobility process, between the first access network and the second access network, of the wireless terminal based on retrieved information.

According to still another aspect the object is achieved by a wireless terminal for handling mobility, between a first access network and a second access network, of the wireless terminal. The wireless terminal comprises a processing circuit configured to collect information of an on-going application or service for the wireless terminal. The processing circuit is further configured to retrieve information whether the on-going application or service supports application or service mobility, comprising an Internet Protocol address change. The processing circuit is furthermore configured to decide whether to initiate a mobility process, between the first access network and the second access network, of the wireless terminal based on retrieved information.

According to yet still another aspect the object is achieved by a network database for enabling mobility, between a first access network and a second access network, of a wireless terminal. The network database comprises a processing circuit configured to provide a radio node or the wireless terminal with information whether an application or service supports application or service mobility, comprising an Internet Protocol address change used at the radio node or the wireless terminal when determining whether to initiate or to allow a mobility process, between the first access network and the second access network, of the wireless terminal based on retrieved information.

According to yet still another aspect the object is achieved by a computer program, comprising instructions which, when executed on at least one processor, cause the at least one processor to carry out any of the methods described herein.

According to yet still another aspect the object is achieved by a computer-readable storage medium, having stored thereon a computer program, comprising instructions which, when executed on at least one processor, cause the at least one processor to carry out any of the methods described herein.

By retrieving information regarding application or service mobility of an on-going application and then taking this into account when initiating or allowing a mobility process the application or service may not get interrupted and therefore the performance of the wireless terminal is enhanced.

### BRIEF DESCRIPTION OF THE DRAWINGS

Figure 1 shows existing network architectures for E-UTRAN/EPC and S2a integration.
Figure 2 shows a schematic overview depicting a wireless telecommunications network and a Wi-Fi network providing communicative coverage over areas.
Figure 3 is a schematic overview depicting nodes in wireless telecommunications network.
Figure 4 is a schematic overview depicting a user equipment in a cell changing process situation.
Figure 5 is a schematic flow chart depicting a method in a radio node according to embodiments herein.
Figure 6 is a combined flowchart and signaling diagram according to some embodiments herein.
Figure 7 is a combined flowchart and signaling diagram according to some embodiments herein.
Figure 8 is a combined flowchart and signaling diagram according to some embodiments herein.
Figure 9 is a schematic flow chart depicting a method in a wireless terminal according to embodiments herein.
Figure 10 is a combined flowchart and signaling diagram according to some embodiments herein.
Figure 11 is a schematic flow chart depicting a method in a network database according to embodiments herein.
Figure 12 is a flow chart depicting a method in a radio node or a wireless terminal according to some embodiments.
Figure 13 is a block diagram depicting nodes according to some embodiments herein.
Figure 14 is a block diagram depicting a radio node and a wireless terminal according to some embodiments herein.
Figure 15 is a block diagram depicting a network database according to some embodiments herein.

### DETAILED DESCRIPTION

As part of developing embodiments herein a problem have first been identified and will be discussed. In order to achieve good support for network controlled Wi-Fi / 3GPP access selection and service mapping taking into consideration of radio access related input parameters such as UE mobility, 3GPP/Wi-Fi cell and network load, radio link performance etc it is required to link, or connect, the UE context in the 3GPP RAN, which holds information about radio performance, UE mobility etc. on the 3GPP side, with the UE context in the Wi-Fi network. This may then enable a network entity to take decisions whether the wireless terminal should access the Wi-Fi network or not depending on if the wireless terminal is stationary, and/or has a good connection to the Wi-Fi AP etc.. The decision may then be signaled to the wireless terminal or executed internally in the 3GPP / Wi-Fi network, e.g. to control UE admission to Wi-Fi.

Although mechanism has been introduced for allowing a wireless terminal to perform authentication towards the Wi-Fi network using Universal Subscriber Identity Module (USIM) credentials and identities e.g. international Mobile Subscriber Identity (IMSI), there is currently no mechanism available for connecting the UE RAN context in the 3GPP RAN with the UE Wi-Fi access context. This leads to reduced performance when moving between different access networks. This means that with existing solutions there is no node in the access network that may identify a single wireless terminal to be the same wireless terminal when it is active in e.g. Wi-Fi and 3GPP respectively - even if it is handled by the same physical base station. There is a problem related to application and service mobility with the existing and known solutions. The existing Wi-Fi deployments are mainly non-integrated and in these solutions the wireless terminal will receive a new IP-address when moving between 3GPP and non-3GPP, e.g. Wi-Fi, networks. The initial purpose of the S2a-based integration to the mobile core network was to preserve the same IP-address when the wireless terminal moves between 3GPP accesses, e.g. GSM, WCDMA/UMTS, LTE/SAE, and non-3GPP accesses, e.g. Wi-Fi. Current limitations on the wireless terminal side anyhow prevent the preservation of the same IP-address in these mobility scenarios even when the S2a interface is used. Wi-Fi integration into RAN doesn't either solve the IP-address preservation issue while moving between 3GPP and Wi-Fi accesses.

The above problems have been partly solved with so called application or service based mobility also known as application and/or service based mobility, application mobility or as used herein application or service mobility. The basic principle is as following: When the wireless terminal is connected to the 1^{st} access network, e.g. 3GPP, with IP-address-1 and is then allocated IP-address-2 when moving to the 2^{nd} access nework, e.g. Wi-Fi. The application or service mobility is based on the client application, or service, on the UE-side detecting the change of IP-address and informing the target side, e.g. a server application, about the IP-address change. This will enable application mobility i.e. the application will survive the mobility in a more or less seamless way. The communication with the client and server parts of the application may however take some time and there is a possibility for a minor interruption in the application level.

All applications and services have not implemented application or service mobility, and in these cases the application or service will normally need to be restarted after the described mobility events. The embodiments herein solve this problem by having knowledge about which applications and services that do have for support application or service mobility and using this knowledge to control when for example handover or mobility between e.g. 3GPP and Wi-Fi should be triggered.

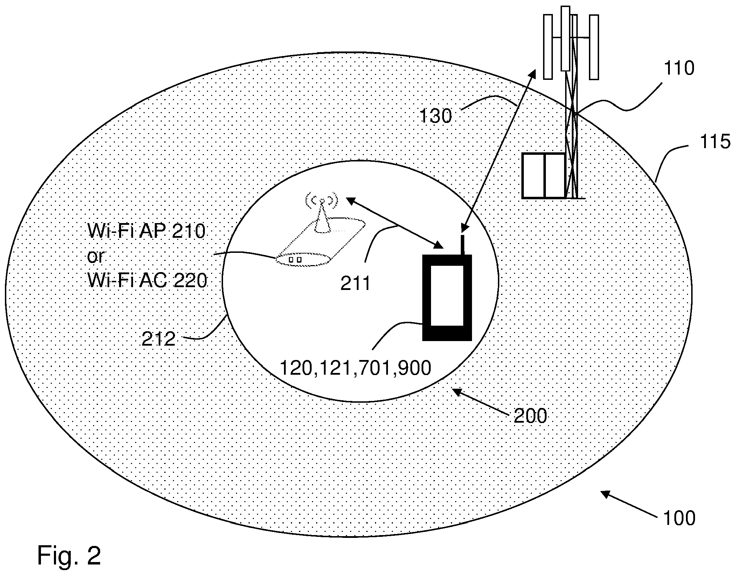

**Figure 2** depicts **a first access network 100** e.g. a cellular radio network. In some embodiments, the first access network 100 may be a wireless telecommunication network such as an LTE, LTE-Advanced (LTE-A), WCDMA, UTRA TDD, GSM network, GPRS network, enhanced data rate for GSM evolution (EDGE) network, network comprising of any combination of Radio Access Technologies (RATs) such as e.g. Multi-Standard Radio (MSR) base stations, multi-RAT base stations etc., any 3GPP cellular network, WiMAX, or any cellular network or system.

The first access network 100 comprises a **radio network node 110,** which may be referred to as a base station and is an example of a radio node according to embodiments herein. The radio network node 110 serves **a cell 115.** The radio network node 110 may in this example e.g. be an eNB, an eNodeB, a NodeB or a Home Node B, a Home eNode B, a femto Base Station (BS), a pico BS or any other network unit capable to serve a wireless device or a machine type communication device which is located in the cell 115 in the first access network 100. The radio network node 110 may also be connected to a core network node (not shown) in the first access network 100.

A **wireless terminal 120** is located within the cell 115. The wireless terminal 120 is configured to communicate within the first access network 100 via the radio network node 110 over a **radio link 130** when the wireless terminal 120 is present in the cell 115 served by the radio network node 110. The wireless terminal 120, which also may be referred to as a user equipment (UE), may e.g. be a mobile terminal, a wireless device, a mobile phone, a computer such as e.g. a laptop, a Personal Digital Assistant (PDA) or a tablet computer, sometimes also referred to as a surf plate, with wireless capability, a device equipped with a wireless interface, such as a camera, a printer or a file storage device or any other radio network unit capable of communicating over a radio link in a telecommunications system. It should be noted that herein the terms "wireless terminal" and "user equipment" may be used interchangeably. The wireless terminal 120 may in some embodiments be referred to as **a wireless terminal 121** when being a legacy wireless terminal, and a wireless terminal 701 or wireless terminal 900 when being a non-legacy wireless terminal, or an amended or updated wireless terminal, described below.

Figure 2 further depicts **a second access network 200,** such as a Wi-Fi network or a network for unlicensed frequencies, or a Wireless Local Access Network (WLAN), an IEEE 802.11 network, or similar, in which embodiments herein may be implemented. The second access network 200 may also be referred to herein as a Wi-Fi Access Network (AN).

The second access network 200 comprises a network node, also referred to as radio network node as above, and is an example of a radio node according to embodiments herein. The network node provides Wi-Fi coverage with a **coverage area 212.** The network node may e.g. be a Wi-Fi access node, which also may be referred to as **a Wi-Fi Access Point (AP) 210** or **a Wi-Fi Access Controller (AC) 220,** or any other network unit capable of serving the wireless terminal 121 when being located within the coverage area 212 in the second access network 200 within the free and wide unlicensed spectrum for Wi-Fi.

The wireless terminal 120 is located within the coverage are 212. The wireless terminal 120 is configured to communicate within the second access network 200 via the Wi-Fi AP 210 and/or the Wi-Fi AC 220 over a **Wi-Fi link 211** when the wireless terminal 120 is present within the coverage area 212 served by the Wi-Fi AP 210 and/or the Wi-Fi AC 220. The wireless terminal 120 is provided with Wi-Fi capability for establishing and communicating via the Wi-Fi link 211.

A radio node is a radio network node, exemplified herein as the radio network node 110, the Wi-Fi AP 210 and/or the Wi-Fi AC 220 herein, comprised in a radio communications network, e.g. an access point, a radio base station or similar. A radio network node, and hence the radio node, may be capable of receiving radio signals or transmitting radio signals in one or more frequencies, and may operate in single-RAT, multi-RAT or multi-standard mode, e.g. a Multi Standard Radio (MSR). A radio network node, including eNodeB, Remote Radio Head (RRH), Remote Radio Unit (RRU), or transmitting-only/receiving-only radio network nodes, may or may not create own cell. Some examples of radio network nodes that do not create an own cell are beacon devices transmitting configured radio signals or measuring nodes receiving and performing measurements on certain signals, e.g., Location Measurement Units (LMU). It may also share a cell or the used cell ID with another radio node which creates own cell, it may operate in a cell sector or may be associated with a radio network node creating own cell. More than one cell or cell sectors, commonly named in the described embodiments by a generalized term "cell" which may be understood as a cell or its logical or geographical part, may be associated with one radio network node. Further, one or more serving cells, in DL and/or UL, may be configured for a wireless terminal, e.g., in a carrier aggregation system where a wireless terminal may have one Primary Cell (PCell) and one or more Secondary Cells (SCells). A cell may also be a virtual cell, e.g., characterized by a cell ID but not provide a full cell-like service), associated with a transmit node.

A concept of embodiments herein is to combine information about on-going applications and services for the wireless terminal 120 with information which application and services that do support application or service mobility. The combined information is then utilized in controlling whether mobility and/or handover between e.g. 3GPP and Wi-Fi should be allowed or not. This is achieved by introducing network based methods, that is, performed in a radio node, utilizing information available in the network which works for all wireless terminals. In addition, embodiments herein also propose for wireless terminal based methods, that is, performed in the wireless terminal 120, that work in case there is no network support. Radio node here covers radio network nodes and network nodes or any node in the RAN or access network controlling or being part of a mobility process.

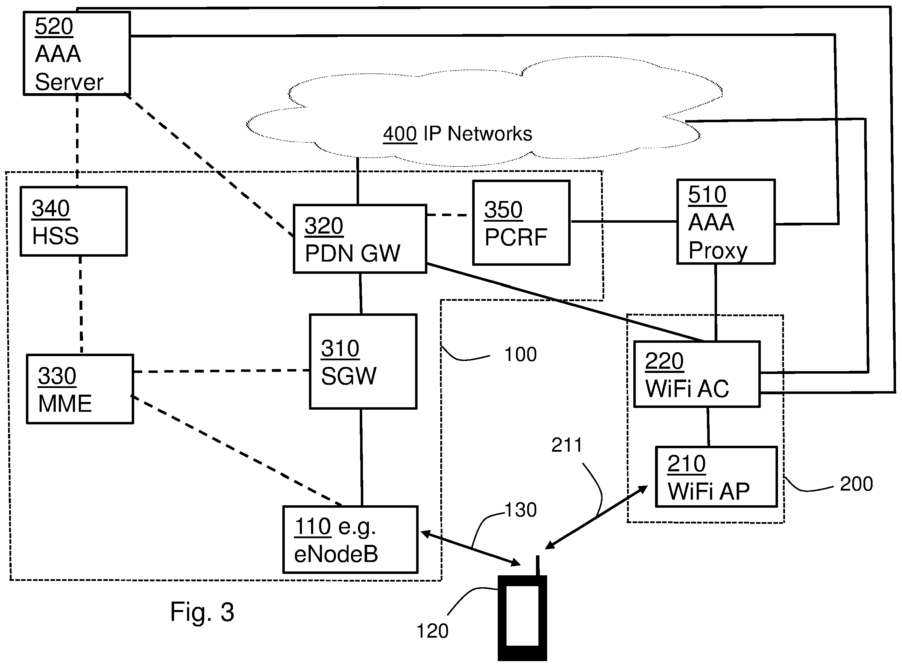

**Figure 3** depicts a more detailed view of the exemplary entities that may be comprised in the first access network 100 and the second access network 200 in Figure 2. Thus, Figure 3 shows a wireless telecommunications network as an example of the first access network 100 and a Wi-Fi network as an example of the second access network 200 according to some embodiments. The second access network 200, or Wi-Fi Access Network (AN), is one example of a Wi-Fi deployment. The first access network 100 may be a Wi-Fi network and the second access network 200 may be a wireless telecommunications network.

In Figure 3, the second access network 200 comprises at least one radio network node, e.g. the Wi-Fi AP 210 and/or the Wi-Fi AC 220.

A typical Wi-Fi deployment may comprise attaching one or more Wi-Fi APs 210 to a wired Local Area Network (LAN) (not shown), and then via the one or more Wi-Fi APs 210 provide wireless access for the wireless terminal 120 to the wired LAN. The one or more Wi-Fi APs 210 may be managed by the Wi-Fi AC 220, which may also be referred to as a Wireless LAN (WLAN) Controller. The Wi-Fi AC 220 conventionally may handle automatic adjustments to Radio Frequency (RF) power, channels, authentication, and security, etc.

The Wi-Fi AC 220 may be connected to a **Packet Data Network (PDN) Gateway (GW) 320** in the first access network 100. The Wi-Fi AC 220 and the PDN GW 320 may also be connected to further **IP-based networks 400,** such as e.g. the Internet, etc. The link between the Wi-Fi AC 220 and the PDN GW 320 may e.g. be an S2a interface used for the Wi-Fi network user plane traffic. THE PDN GW 320 is connected to **a Serving Gateway (SGW) 310** and to **a Policy Control Rule Function (PCRF) 350.** The SGW 310 is connected to **an MME 330,** which is connected to **an HSS 340.**

The at least one radio network node 210, 220 is also connected to an authentication node such as **an AAA proxy 510** and **an AAA server 520.**

In some embodiments, the authentication node may be a wireless device authentication server for wireless terminals in the first access network 100. The wireless device authentication server 520 may also commonly be referred as the AAA server 520. The link between the at least one network node, such as the Wi-Fi AP 210 and/or the Wi-Fi AC 220, and the AAA server 520 may e.g. be a STa interface used for the common authentication between the core network of the first access network 100 and the second access network 200.

In some embodiments, the authentication node may be an authentication proxy node, denoted AAA proxy 510 above, that is connected between the PCRF 350 and the AAA server 520. In some embodiments, the AAA proxy 510 may be connected between the network node, such as the Wi-Fi AP 210 and/or the Wi-Fi AC 220, in the second access network 200 and the AAA server 520.

The wireless terminal 120 may move between a radio network node 110, e.g. a eNodeB, and the Wi-Fi AP 210 or Wi-Fi AC 220.

It should be noted that the configuration of the second access network 200 described above is only an illustrative example described to help understand the embodiments presented herein. It should therefore be understood that the second access network 200 may be configured or arranged in several other ways and may comprise several further network nodes or entities. For example, the at least radio one network node, such as the Wi-Fi AP 210 and/or the Wi-Fi AC 220, may be connected to a Broadband Network Gateway (BNG) in the wired LAN. In another example, the at least one network node, such as the Wi-Fi AP 210 and/or the Wi-Fi AC 220, may be co-located with a Residential Gateway (RG). In a further example, the second access network 200 may also comprise a Trusted WLAN Access Gateway (TWAG) configured to communicate with the at least one network node, such as the Wi-Fi AP 210 and/or the Wi-Fi AC 220. The second access network 200 may also be referred to as a network for unlicensed resources, spectrums or frequencies.

It should also be understood that when the second access network 200 is configured with such further network nodes or entities as described above, one or more of these further network nodes or entities may be configured to perform one or more of the actions or operations described as performed by at least one network node 210, 220, such as the Wi-Fi AP 210 and/or the Wi-Fi AC 220.

For example, since the link between the Wi-Fi AC 220 and the PDN GW 320, e.g. an S2a interface, in the example shown in Figure 3, may also be implemented between the PDN GW 320 and any one of the at least one radio network node, such as the Wi-Fi AP 210 and/or the Wi-Fi AC 220, BNG, RG, etc., the network node or entity connected to the PDN GW 320 may be configured to perform one or more of the actions or operations described as performed by the at least one network node, such as the Wi-Fi AP 210 and/or the Wi-Fi AC 220 as described herein or function as a simple intermediary node.

PCT/SE2012/051007 ("IMSI Resolution in Wi-Fi integration in RAN solutions") describes a solution to overcome this problem and to enable tight Wi-Fi integration into RAN.

A concept of PCT/SE2012/051007 is to introduce additional functionality to:
- Locate the UE RAN context in the other RAT (Wi-Fi, 3GPP RAN) based on a permanent or temporary identifier of the UE
- Convey RAN related parameters between the RAN entities serving the UE and thus enabling access network selection or service mapping decisions for the UE to be taken in the network
- (optionally) conveying the access network selection or service mapping decisions to RAN nodes (Wi-Fi or 3GPP RAN)
- (optionally) conveying the access network selection or service mapping decisions to the UE (e.g. in form of access selection commands or access selection policies)
- (optionally) assigning temporary identities to the UE while connected in one RAT, which the UE subsequently use to identify itself in the other RAT

The envisioned solution for legacy Wi-Fi UEs is a so called target based network controlled solution where the UE by itself tries to perform access to the target access (Access B), which then triggers the network to take a access selection or services mapping decision.

This is different from existing inter-RAT handover mechanism within 3GPP where the UE sends a measurement report to the source RAT, over the source radio, so that the source RAT may initiate handover, to a specific target cell. In those types of solutions there is no need for the functionality of finding the RAT context in the source RAT based on a UE identifier since the handover decision is taken in the source RAT prior to UE accessing the target RAT. This solution also relies on that the UE will not leave the source RAT until it has successfully connected to the target RAT (which is different from existing procedures). This makes it possible to use mechanism in the target RAT for controlling the UE access selection, i.e. by denying the UE access in the target RAT the UE will stay in the source RAT.

The advantage of target based solutions is that they do not require any UE impacts, meaning that they may be applied to existing UEs on the market. Target based solutions may however still benefit from UE impacts.

As stated above, there is a problem related to application or service mobility with the existing and known solutions. All applications and services have not implemented application or service mobility, and in these cases the application or service will normally need to be restarted after the described mobility events. Embodiments herein solve this problem by having knowledge about which applications and services that do have support for application or service mobility and using this knowledge to control when for example handover or mobility between e.g. 3GPP and Wi-Fi should be triggered. Hence, as stated above a concept of embodiments disclosed herein is to combine information about on-going applications and services for the wireless terminal 120 with information about applications and/or services that do/don't support application or service mobility also called application level mobility. The combined information is then utilized in controlling whether mobility and/or handover between 3GPP and Wi-Fi should be allowed or not due to the assumed impact on end user experience.

This is achieved by introducing network based methods utilizing information available in the network which works for all wireless terminals 120, such as legacy wireless terminals 121 and other terminals 701. Embodiments are also proposed for wireless terminal based methods, i.e. which requires new wireless terminals such as wireless terminal 900 below, that work in case there is no network support. Embodiments based on network side decisions are described in section 1.1 below and the wireless terminal based methods are described in section 1.2 below.

The description is mainly based on "on-going applications and services". An aspect according to embodiments herein is however also the different states of the on-going applications and services. These states will impact the mobility decisions and are to be seen as part of the embodiments described herein. For example, a VoIP application like Skype could be active in the wireless terminal 120 but the more important part to consider is if there is an active voice and/or video VoIP call, an actual active session, in the wireless terminal 120 or not. If the application was active but there is no traffic apart from some keep alive status updates, then the application or service mobility support aspect may be disregarded in the handover decisions.

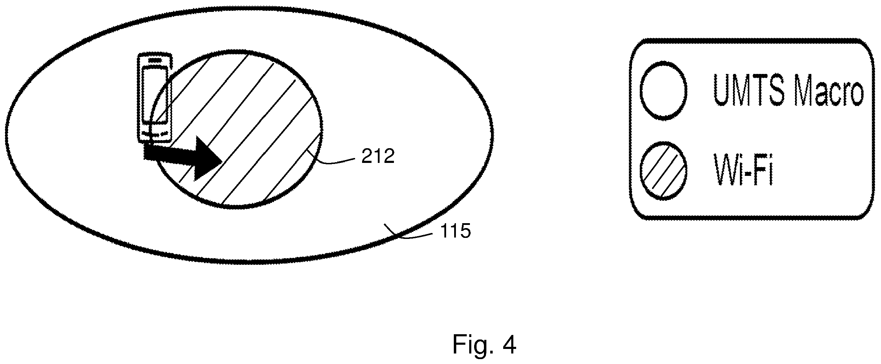

**Figure 4** shows the mobility scenario of the example i.e. the wireless terminal 121 being a legacy wireless terminal is active in the first access network 100, e.g. WCDMA/HSPA, the white cell covering the bigger area 115, and detects the second access network 200, e.g. the Wi-Fi AP 220, or actually the coverage 212 of the Wi-Fi AP marked with diagonal lines, and makes an access attempt towards it.

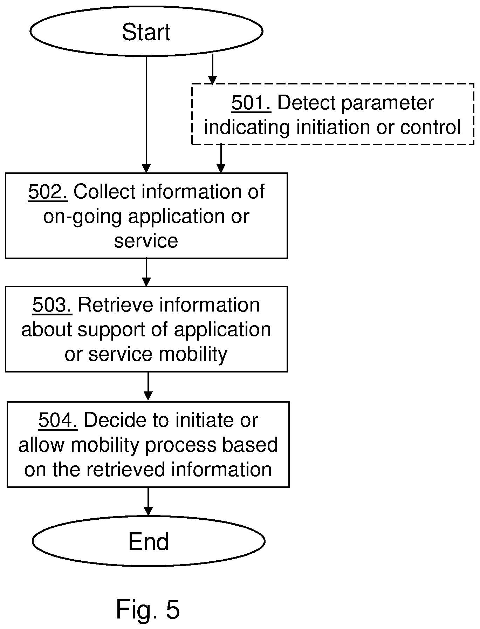

The method actions in the radio node, referred to as radio network node 110, a network node such as the Wi-Fi AP 210 and Wi-Fi AC 220, and also NodeB 601 and RNC 602 in the figures herein, for handling mobility, between the first access network 100 and the second access network 200, of the wireless terminal 120 according to some embodiments will now be described with reference to a flowchart depicted in **Fig. 5****.** The actions do not have to be taken in the order stated below, but may be taken in any suitable order. Actions performed in some embodiments are marked with dashed boxes. The first access network may e.g. be a cellular radio network, such as a wireless telecommunications network, and the second access network may be a Wi-Fi network or an unlicensed frequencies network, or vice versa.

**Action 501.** The radio node may detect a parameter indicating initiation or control of the mobility procedure. E.g. the radio node may receive from a network node, such as the network node 210,220 or the radio network node 110, or the wireless terminal 120, an indication of an attempt of the wireless terminal 120 to access one of the first and second access networks, or receive a measurement report indicating initiation of the mobility process. Hence, the parameter may be measurement, indication, a request or similar. E.g. the radio node may receive a measurement report from the wireless terminal 120 indicating that conditions for initiating mobility process to access one of the first and second access networks are fulfilled.

**Action 502.** The radio node collects information of an on-going application or service for the wireless terminal 120. E.g. the radio node may determine that a session of the application or service is active, such as that the application is not only running but is actually communicating over a radio link to the wireless terminal 120.

**Action 503.** The radio node retrieves information whether the on-going application or service supports application or service mobility. The information may be retrieved by retrieving or obtaining the information from the network database.

**Action 504.** The radio node decides to initiate or allow a mobility process, between the first access network 100 and the second access network 200, of the wireless terminal 120 based on retrieved information. According to some embodiments the radio node further takes signal level thresholds of the first and the second access network into account to determine when to override a decision based on the retrieved information. E.g. the radio node may even if the on-going application does not support application or service mobility handover the wireless terminal 120 to e.g. the second access network 200 as the signal level of the first access network 100 is too low. Hence, taking into account the signal levels of the first and the second access networks to determine when to override a decision based on the retrieved information.

Examples below relate to mobility between a first access network 100, exemplified as a cellular radio network or 3GPP network, and a second access network 200, exemplified as a Wi-Fi network or a non 3GPP network. However, claimed embodiments may also be implemented for mobility between cellular radio networks of different RATs or similar.

### 1.1 Network side decisions

These embodiments apply both for the legacy wireless terminals such as the wireless terminal 121, in the "Wi-Fi mobility" context, and new wireless terminals, such as the wireless terminal 701 supporting network controlled "Wi-Fi mobility". These cases are described separately below in the different sub-sections.

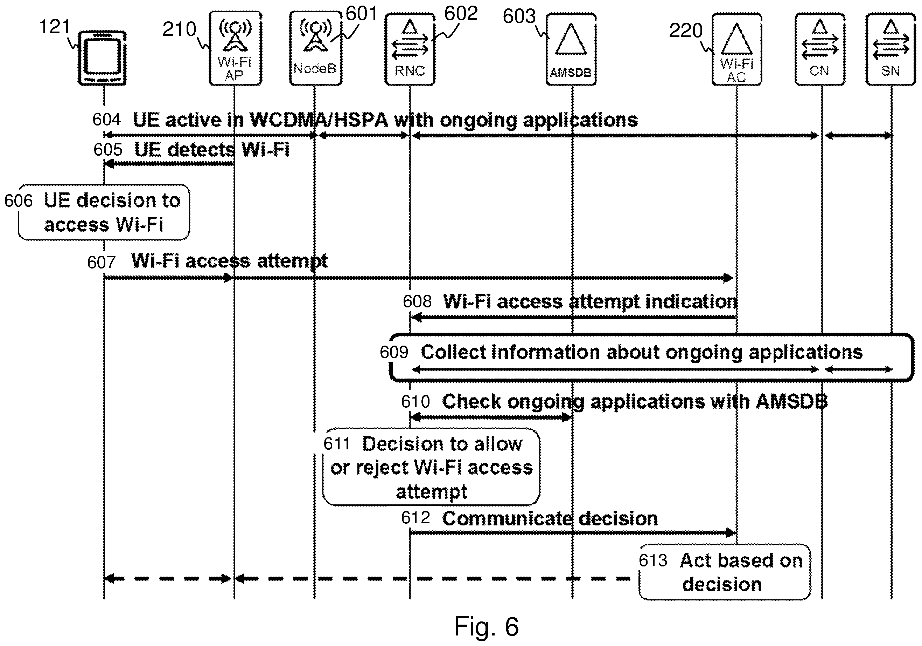

The main principle in both these cases is also that the network, i.e. the radio node, is aware of both the on-going applications on the wireless terminal-side and the application or service mobility support of the different applications or services. The application or service mobility support of the different applications is assumed to be configured in e.g. a network database, shown in e.g. Fig. 6, that is accessible from both the 3GPP network and Wi-Fi networks. This network database may be called *"Application mobility support database"* (AMSDB).

### 1.1.1. Network side decisions for legacy UEs

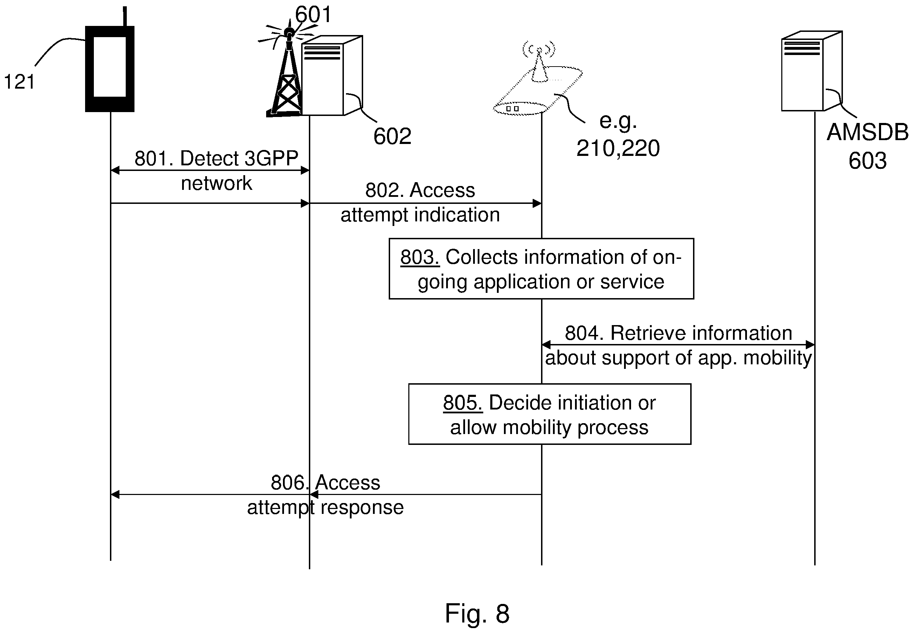

In the legacy wireless terminal-case, the wireless terminal 121 will attempt to access Wi-Fi and the only actions to control Wi-Fi mobility in this case are to either reject or accept the access attempt. An example is described in Figures 6-7 below. The Wi-Fi network, the RNC or base station, needs to retrieve information about the ongoing/active applications in the 3GPP side, either from the RAN or from the CN or from the service network (SN). In addition, information from the *Application mobility support database* 603 needs to be retrieved. Here different alternatives are possible as following:
- The Wi-Fi side retrieves, described e.g. in Figure 8 below, information about both the ongoing/active applications in the 3GPP side and information from the *Application mobility support database* 603 and the decision is taken on the Wi-Fi side, Wi-Fi access node or similar.
- The Wi-Fi side informs the 3GPP side about the Wi-Fi access attempt and the 3GPP side makes the decision based on information about both the ongoing/active applications in the 3GPP side and information from the *Application* mobility *support database,* described e.g. in Figure 6 below, Then the decision is communicated to the Wi-Fi side, from e.g. the RNC or base station. The Wi-Fi side may also include other information as described in the background description for PCT/SE2012/051007.

The 3GPP side, i.e. RAN or CN or SN that may be contacted from the Wi-Fi side depends also about the wireless terminal state in the mobile network. If the wireless terminal 121 is RAN active/connected state then RAN may have the information about active applications. CN and SN may have information about the active applications also when the wireless terminal 121 is in RAN idle state. The information about the current applications in the RAN, CN or SN may be based on different packet inspection mechanisms like header inspection or deep packet inspection. Another alternative would be to create a more persistent RAN function that may hold information about active applications also in the case when the wireless terminal 121 is in RAN idle state.

In case the detailed information about the different active applications or services and their mobility support is not directly available in the RAN, it is possible to indirectly transfer this information from the CN or SN to the RAN using some combination of Quality of Service profiles, e.g. 3GPP defined Quality of Service (QoS) Class Identifier (QCI). Allocation and Retention Priority (ARP) parameters, or as a part of the mobility profile of the wireless terminal 121, e.g. 3GPP defined Subscriber Profile ID (SPID). In this case the RAN will use one or more of these parameters, e.g. the mobility profile + QCI, to determine if the wireless terminal 121 should be handed over to Wi-Fi or not. An example of this case is shown in Figure 6 below.

**Figure 6** shows some actions for the second variant above under section 1.1.1 i.e. the case when the decision is taken on the 3GPP RAN side. The wireless terminal 121 is in this figure referred to as UE 121 and the first access network 100 is an UMTS network comprising the radio nodes, a radio base station or **NodeB 601** and **an RNC 602.**

604. The UE 121 is active in WCDMA/HSPA network with on-going applications.

605. The UE 121 detects the second access network, exemplified as Wi-Fi network.

606. The UE 121 makes a decision to access Wi-Fi.

607. The UE 121 makes an access attempt over the Wi-FI AP 210 to the Wi-Fi AC 220.

608. The Wi-Fi AC 220 transmits an indication of the access attempt to the RNC
602. This is an example of the parameter mentioned in action 501 in figure 5.

609. The RNC 602 collects information about on-going applications e.g. from the CN and the SN. This corresponds to the action 502 in figure 5.

610. The RNC 602 checks or retrieves information about support of application mobility of the on-going applications from the network database, exemplified as an **AMSDB 603.** This corresponds to the action 503 in figure 5.

611. The RNC 602 decides whether to allow or reject the Wi-Fi access attempt based on the retrieved information. This corresponds to the action 504 in figure 5.

612. The RNC 602 may communicate the decision to the Wi-Fi AC 220.

613. The Wi-Fi AC 220 acts based on the decision e.g. transmits a rejection to the UE 121 via the Wi-Fi AP 210.

### 1.1.2 Network side decisions for "new UEs", denoted as wireless terminal 701

In this case it is assumed that the current serving access is in control of the UE mobility between e.g. 3GPP and Wi-Fi accesses. This means that for example 3GPP Radio Resource Control (RRC) protocol supports the needed Wi-Fi measurement reporting and network controlled mobility, e.g. handover, cell change order or release with redirect, for active UEs. Similar support may be made available on the Wi-Fi side for mobility towards the 3GPP side.

In this case the current serving RAN or a radio node, e.g. eNB or RNC or BSC in the 3GPP side or the Wi-Fi AP or Wi-Fi AC on the Wi-Fi side, makes the mobility decisions based on information about ongoing applications and information from the *Application Mobility Support Database (AMSDB) 603.* The radio node may collect information regarding on-going applications; check on-going applications with information whether the on-going application support application or service mobility; and decide whether to allow or reject access based on the check.

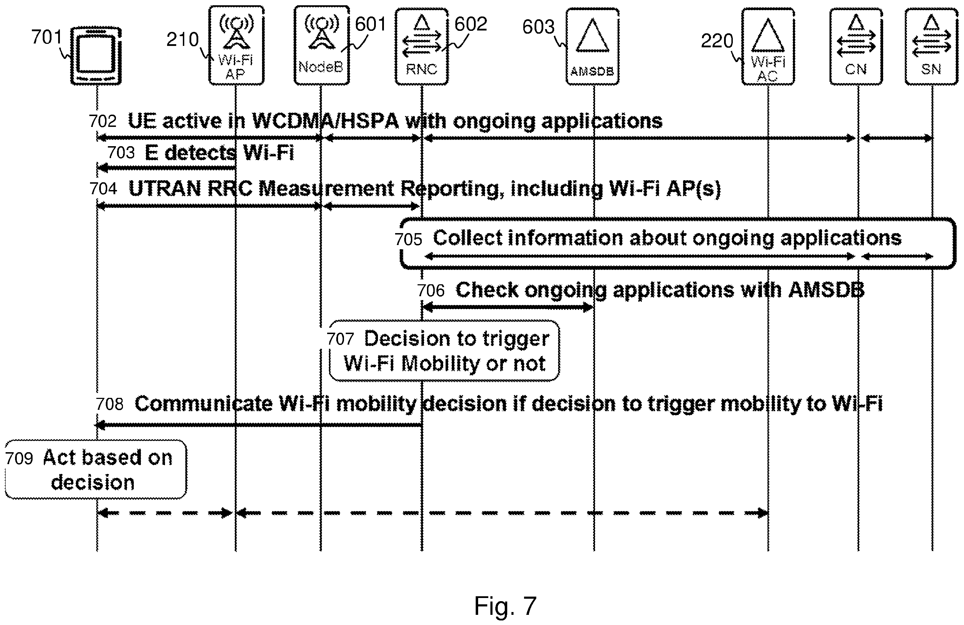

An example of this case is shown in **Figure 7****.** The mobility scenario is the one described in Figure 4 and used also in the Figure 6 example. The wireless terminal 701 is denoted as UE 701 in the figure 7.

702. The UE 701 is active in WCDMA/HSPA network with on-going applications.

703. The UE 701 detects the second access network, exemplified as Wi-Fi network.

704. The UE 701 sends a report of the signaling strengths or performs a UTRAN RRC Measurement Reporting including reports of the Wi-Fi AP(s). This is transmitted to the RNC 602 over the NodeB 601. This is an example of the parameter mentioned in Action 501 in Figure 5.

705. The RNC 602 collects information about on-going applications e.g. from the CN and the SN. This corresponds to the action 502 in figure 5.

706. The RNC 602 checks or retrieves information about support of application mobility of the on-going applications from the AMSDB 603. This corresponds to the action 503 in figure 5.

707. The RNC 602 decides to trigger or initiate Wi-Fi mobility or not. This corresponds to action 504 in Figure 5.

708. The RNC 602 communicates the decision, Wi-Fi mobility decision if decision is to trigger mobility to Wi-Fi.

709. The UE 701 acts based on the decision and may as indicated by the dotted line request access to the Wi-Fi network via the Wi-Fi AP 210 and the Wi-Fi AC 220.

An example of a case where the wireless terminal 121 moves from a Wi-Fi network to a cellular radio network, e.g. a 3GPP network, is shown in **Figure 8****.**

**Action 801.** The wireless terminal 121 detects the 3GPP network when being active in the Wi-Fi network. E.g. receiving signals from the NodeB 601.

**Action 802.** The wireless terminal 121 transmits an access attempt indication via the RNC 602 to the network node e.g. Wi-Fi AC 220 or the Wi-Fi AP 210.

**Action 803.** The network node collects information of an on-going application or service for the wireless terminal 121.

**Action 804.** The network node retrieves information whether the on-going application or service supports application or service mobility. The information may be retrieved by retrieving the information from the network database.

**Action 805.** The network node decides to initiate or allow a mobility process, between the Wi-Fi network and the 3GPP network, of the wireless terminal 121 based on retrieved information.

**Action 806.** The network node transmits an access attempt response to the RNC 602 that may be forwarded to the wireless terminal 121 over the NodeB 601.

### a. Wireless terminal side decisions

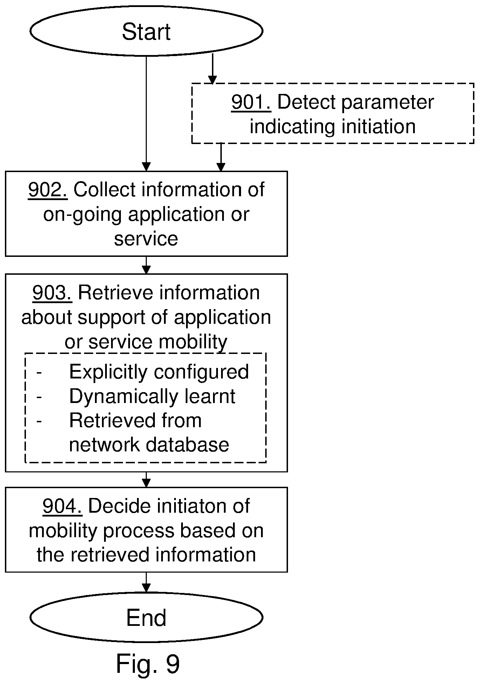

Some embodiments apply mainly for the case when the wireless terminal 120 decides whether to trigger mobility from e.g. 3GPP to Wi-Fi, or the other way around. As such, legacy wireless terminals have to be upgraded in order to support access network selection that considers the active services/applications. This type of wireless terminal 120, which is an example of a radio node, is denoted **a wireless terminal 900** and a method therein for handling mobility, between a first access network and a second access network, of the wireless terminal 900 is shown in **Figure 9****.** The first access network may be a cellular radio network and the second access network may be a Wi-Fi network. The wireless terminal 900 may be referred to as an updated wireless terminal or a second wireless terminal.

**Action 901.** The wireless terminal 900 may detect that a parameter indicates initiation of the mobility procedure. E.g. the wireless terminal may detect one of the first or second access networks. Hence, the parameter may be a signal from an access network or similar. Thus, the wireless terminal 900 may determine the initiation of the mobility procedure based on access network detection.

**Action 902.** The wireless terminal 900 collects information of an on-going application or service for the wireless terminal 900.

**Action 903.** The wireless terminal 900 retrieves information whether the on-going application or service supports application or service mobility. The information may be retrieved from within the wireless terminal 900, explicitly configured in the wireless terminal 900, and/or dynamically learnt in the wireless terminal 900. The information may further be retrieved from the network database.

A principle is that the wireless terminal 900 knows which applications and services that don't support application level mobility and that which applications that are currently active. If any applications that don't support applications mobility are active then the wireless terminal 900 doesn't trigger the related mobility procedure.

The knowledge about the application level mobility support on the wireless terminal side may be:
i) **Explicitly configured in the wireless terminal 900:** An interface may be provided where the user of the wireless terminal 900 may explicitly select the applications/services that do not support application level mobility.
ii) **Dynamically learnt in the wireless terminal 900:** This may be done by detecting mobility events and how the currently running applications/services react to these. For example, if is it detected than an application needs to be restarted in relation to a mobility event then this application may be marked as not supporting application level mobility in the wireless terminal 900.
**iii) The wireless terminal 900 configured to access the AMSDB 603:** In this case, the wireless terminal 900 has access to the AMSDB 603, for example, via some application interface, and it may query the AMSDB 603 server about the application level mobility support of the currently active applications.
**Action 904.** The wireless terminal 900 decides whether to initiate a mobility process, between the first access network and the second access network, of the wireless terminal 900 based on retrieved information. According to some embodiments the wireless terminal 900 further takes signal level thresholds of the first and the second access network into account to determine when to override a decision based on the retrieved information. E.g. the wireless terminal 900 may even if the on-going application does not support application or service mobility handover the wireless terminal 900 to e.g. the second access network as the signal level of the first access network is too low. Hence, the wireless terminal 900 may take that the signal levels of the first and the second access networks into account when determining when to override a decision based on the retrieved information.

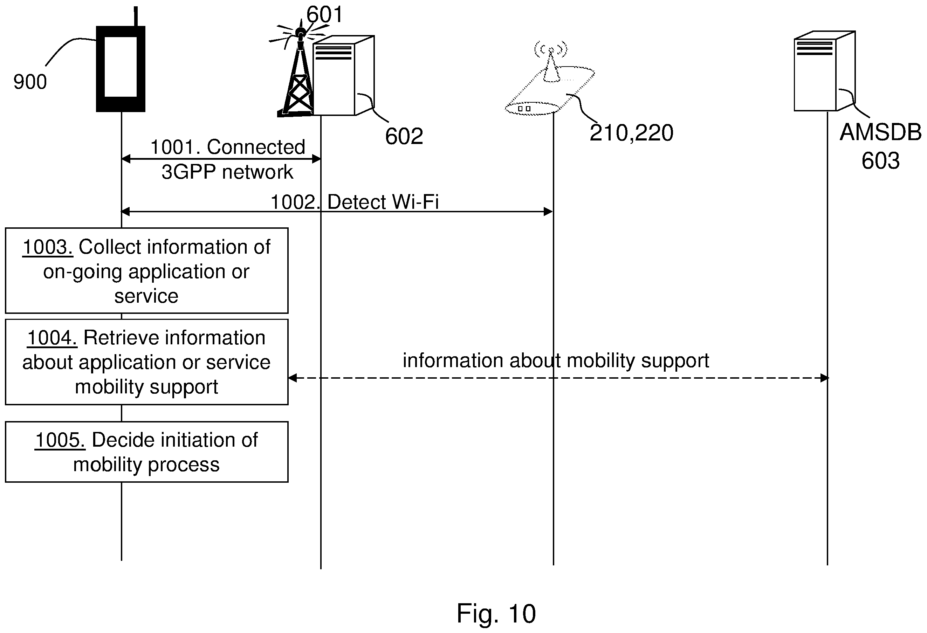

**Figure 10** discloses a combined signaling scheme and flowchart of some embodiments herein.

**Action 1001.** The wireless terminal 900 is connected to e.g. the 3GPP network, communicating with the NodeB 601.

**Action 1002.** The wireless terminal 900 detects, e.g. the Wi-Fi network, signals from the Wi-Fi AP 210 or the Wi-Fi AC 220.

**Action 1003.** The wireless terminal 900 collects information about an on-going application or service. E.g. retrieves information which applications that are running and especially which that are receiving/transmitting data from/to the 3GPP network.

**Action 1004.** The wireless terminal 900 retrieves information about application or service mobility support. As stated above this may be retrieved from the AMSDB 603 or internally as stated above in items i)-iii).

**Action 1005.** The wireless terminal 900 decides whether to initiate a mobility process based on the retrieved information.

It should be noted that for both network based and wireless terminal based embodiments, the mobility decision to be made may be either when going from Wi-Fi to 3GPP or vice versa. Additionally, the decisions to stay in the current network to ensure the continuity of services/applications that don't support mobility make sense only in the cases where the current network still have quality good enough to support the wireless terminal 120. For example, consider a wireless terminal 120 that is currently being served by a Wi-Fi network inside a building without 3GPP access, and that it has/have (an) active service(s) that doesn't/don't support application level mobility. If the user steps outside the building and 3GPP access becomes available and the Wi-Fi signal level degrades quickly, the most optimal decision in that case might be to offload the wireless terminal 120 to the 3GPP side regardless of the temporary discontinuity of the concerned services. One mechanism to perform such optimal decisions could be to have signal level thresholds (either absolute or relative) of the current and target RATs, during which mobility override based on application level mobility support is applicable (i.e. outside this zone defined by the signal level thresholds, the handover decisions are not for "luxury" anymore and must be performed disregarding the support for application continuity).

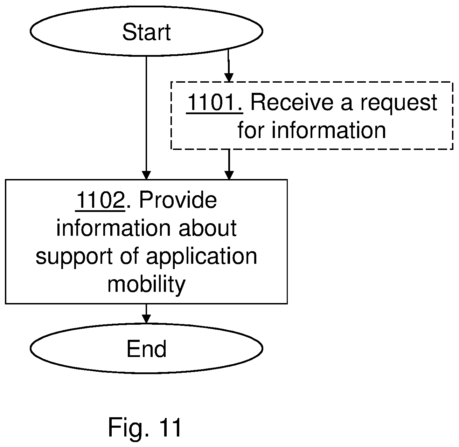

The method actions in the network database, exemplified as an AMSDB 603 in the figures, for enabling mobility, between the first access network 100 and the second access network 200, of the wireless terminal 120 according to some embodiments will now be described with reference to a flowchart depicted in **Figure 11****.** The actions do not have to be taken in the order stated below, but may be taken in any suitable order. Actions performed in some embodiments are marked with dashed boxes. The network database may be a stand-alone unit or integrated in a network node, such as a core network node, service network node, a radio network node 110, a network node 201,220 or similar.

**Action 1101.** The network database may receive a request for information from a radio node, such as radio network node 110, network nodes or another network node, or from the wireless terminal 120.

**Action 1102.** The network database provides the radio node or the wireless terminal 120 with information whether an application or service supports application or service mobility. The information is used at the radio node or the wireless terminal 120 when determining whether to initiate or to allow a mobility process, between the first access network 100 and the second access network 200, of the wireless terminal 120 based on retrieved information. This may be performed upon receiving the request from the radio node and/or the wireless terminal 120.

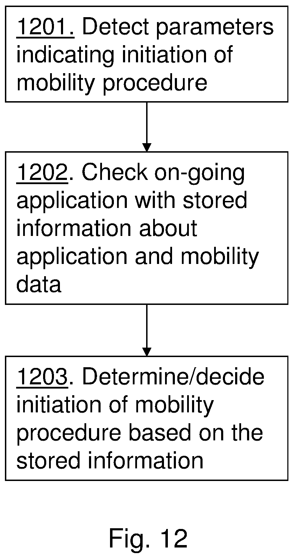

**Figure 12** describes a schematic overview of an example of a method in a user equipment or a network node, commonly referred to as a radio node, covering both the wireless terminal 120 and all the network nodes and the radio network node herein, for determining whether to initiate the mobility procedure based on retrieved information regarding an application level mobility support of current active applications.

**Action 1201.** The radio node detects parameters indicating initiation of mobility procedure.

**Action 1202.** The radio node checks on-going application with stored information about application and mobility data.

**Action 1203.** The radio node determines or decides initiation of mobility procedure based on the stored information.

With the mechanisms described in embodiments herein, access network selection between 3GPP and Wi-Fi RATs takes the application or service mobility support of currently active applications, thereby ensuring that unnecessary service interruptions will not be experienced by the user. Embodiments herein provide a radio node, which may be a radio network node such as a Wi-Fi AP, Wi-Fi AC, a RNC, a BSC, or a base station, or a user equipment, that takes application or service mobility support of currently active applications into account when determining whether to initiate a mobility process of the user equipment such as a handover, between a wireless telecommunications network and a Wi-Fi network.

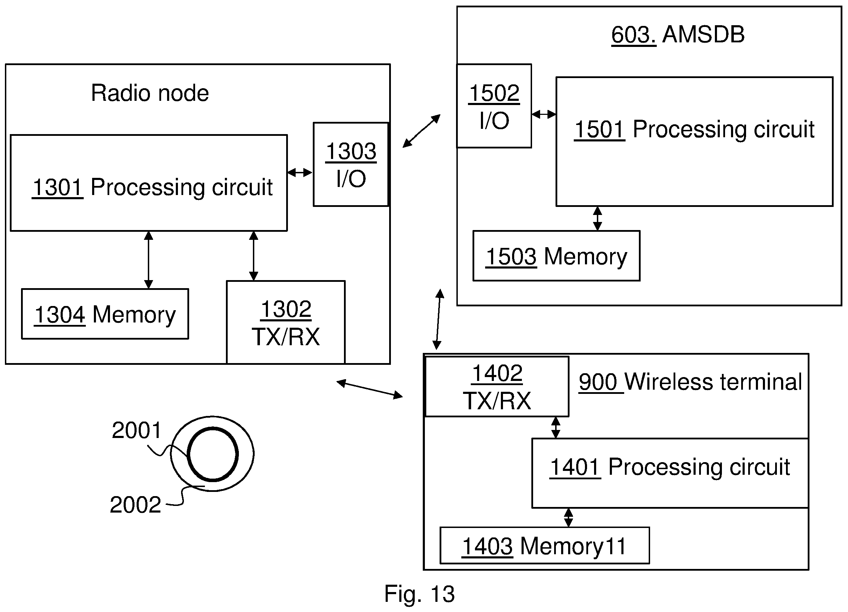

**Figure 13** is a block diagram depicting embodiments of a radio node, the AMSDB 603, and the wireless terminal 900. The embodiments herein for determining whether to initiate the mobility procedure based on retrieved information regarding an application or service mobility support of current active applications, or on-going application, may be implemented through one or more processors, such as **a processing circuit 1301** in the radio node, and/or **a processing circuit 1401** in the wireless terminal 900 depicted in Fig. 13, together with computer program code, or **computer program 2001,** for performing the functions and/or method actions of the embodiments herein when being executed on a processor such as one of the processing circuits. The information regarding an application or service mobility support of current active applications may be retrieved from the AMSDB 603 over **a communication interface (I/O) 1502.** The AMSDB comprises **a processing circuit 1501** and **a memory 1503** with stored information regarding application or service mobility support of applications or services. The computer program 2001 or the program code mentioned above may also be provided as a computer program product, for instance in the form of a data carrier carrying computer program code for performing embodiments herein when being loaded into the radio node, and/or the wireless terminal 900. One such carrier may be in the form of a CD ROM disc. It is however feasible with other data carriers such as a memory stick. The computer program code may furthermore be provided as pure program code on a server and downloaded to the radio node, and/or the wireless terminal 900. The computer program 2001 or computer programs comprise instructions which, when executed on at least one processor, cause the at least one processor to carry out the method according to embodiments herein. **A computer-readable storage medium 2002** or media having stored thereon a computer program, comprising instructions which, when executed on at least one processor, cause the at least one processor to carry out the method according to embodiments herein.

Each of the nodes then comprises communication interfaces such as the communication interface 1502 in the AMSDB 603, **a transmitter/receiver (TX/RX) 1302** in the radio node that may also comprise **an input/output 1303. The wireless terminal 900 comprises a transmitter/receiver 1402.**

Each of the nodes then also comprises a memory e.g. the memory 1503 in the AMSDB 603, **a memory 1304** in the radio node, and **a memory 1403** in the wireless terminal 900.

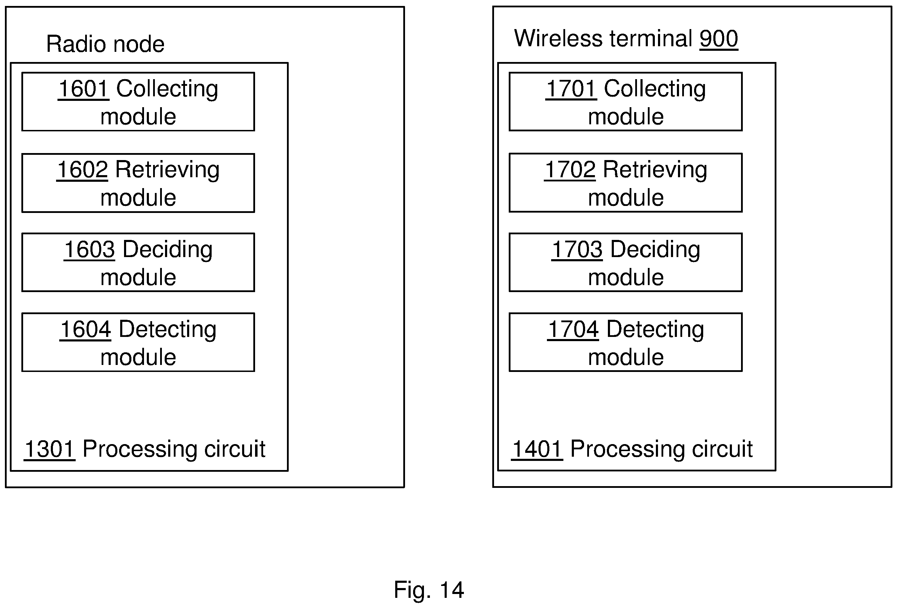

According to perform methods herein a radio node is provided and also a wireless terminal is provided, see **Figure 14****,** for handling mobility, between a first access network 100 and a second access network 200, of a wireless terminal 120. The radio node comprises the processing circuit 1301 configured to collect information of an on-going application or service for the wireless terminal. E.g. the radio node may comprise **a collecting module 1601** configured to collect information of an on-going application or service for the wireless terminal. The processing circuit 1301 or the collecting module may be configured to collect the information by determining that a session of the application or service is active.

The processing circuit 1301 is further configured to retrieve information whether the on-going application or service supports application or service mobility. E.g. the radio node may comprise **a retrieving module 1602** configured to retrieve information whether the on-going application or service supports application or service mobility. The processing circuit 1301 or the retrieving module 1602 may be configured to retrieve the information about application or service support from a network database.

The processing circuit 1301 is further configured to decide to initiate or allow a mobility process, between the first access network 100 and the second access network 200, of the wireless terminal 120 based on retrieved information. E.g. the radio node may comprise **a deciding module 1603** configured to decide to initiate or allow a mobility process, between the first access network 100 and the second access network 200, of the wireless terminal 120 based on retrieved information. The processing circuit 1301 or the deciding module 1603 may be configured to decide whether to allow or control the mobility procedure by further taking into account signal level thresholds of the first and the second access network to determine when to override a decision based on the retrieved information.

The processing circuit 1301 may further be configured to detect a parameter indicating initiation or control of the mobility procedure. E.g. the radio node may comprise **a detecting module 1604** configured to detect a parameter indicating initiation or control of the mobility procedure. The processing circuit 1301 or the detecting module 1604 may further be configured, in order to detect the parameter, to receive from a network node or the wireless terminal 120, an indication of an attempt of the wireless terminal to access one of the first and second access networks or receiving a measurement report indicating initiation of the mobility process.

The first access network 100 may be a cellular radio network and the second access network 200 may be a Wi-Fi network.

The wireless terminal 900 comprises the processing circuit 1401 configured to collect information of an on-going application or service for the wireless terminal 900. For example, the wireless terminal 900 may comprise **a collecting module 1701** configured to collect information of an on-going application or service for the wireless terminal 900.

The processing circuit 1401 is further configured to retrieve information whether the on-going application or service supports application or service mobility. E.g. the wireless terminal 900 may comprise **a retrieving module 1702** configured to retrieve information whether the on-going application or service supports application or service mobility. The processing circuit 1401 or the retrieving module 1702 may be configured to retrieve the information from within the wireless terminal 900 explicitly configured in the wireless terminal 900, and/or dynamically learnt in the wireless terminal 900. The processing circuit 1401 or the retrieving module 1702 may alternatively or additionally be configured to retrieve the information from a network database.

The processing circuit 1401 is further configured to decide whether to initiate a mobility process, between the first access network and the second access network, of the wireless terminal 900 based on retrieved information. E.g. the wireless terminal 900 may comprise **a deciding module 1703** configured to decide whether to initiate a mobility process, between the first access network 100 and the second access network 200, of the wireless terminal 900 based on retrieved information. According to some embodiments the processing circuit 1401 or the deciding module 1703 may be configured to take signal level thresholds of the first and the second access network into account to determine when to override a decision based on the retrieved information. E.g. the wireless terminal 900, the processing circuit 1401 or the deciding module 1703 may even if the on-going application does not support application or service mobility handover the wireless terminal 900 to e.g. the second access network as the signal level of the first access network is too low. Hence, the wireless terminal 900, the processing circuit 1401 or the deciding module 1703 may take that the signal levels of the first and the second access networks into account when determining when to override a decision based on the retrieved information.

The processing circuit 1401 may further be configured to detect that a parameter indicating initiation of the mobility procedure. E.g. the wireless terminal 900 may comprise **a detecting module 1704** configured to detect that a parameter indicating initiation of the mobility procedure. The processing circuit 1401 or the detecting module 1704 may be configured to detect by detecting one of the first or second access networks.

According to some embodiments the wireless terminal 120, such as the wireless terminal 900, stops from initiating a mobility process if it has any active applications that don't support mobility seamlessly. According to some embodiments a legacy wireless terminal such as the wireless terminal 121 initiates mobility, based on radio conditions, for example, and the radio node checks if the wireless terminal 121 has active applications that don't support mobility, and if so, prevents the mobility from happening. A new or non-legacy, wireless terminal 120 such as the wireless terminal 701: network finds out it is time to initiate mobility, e.g. based on measurement report from the wireless terminal 701 that shows the target network is preferable, network checks if the wireless terminal 701 has active applications that don't support mobility, and if so, doesn't initiate the mobility.

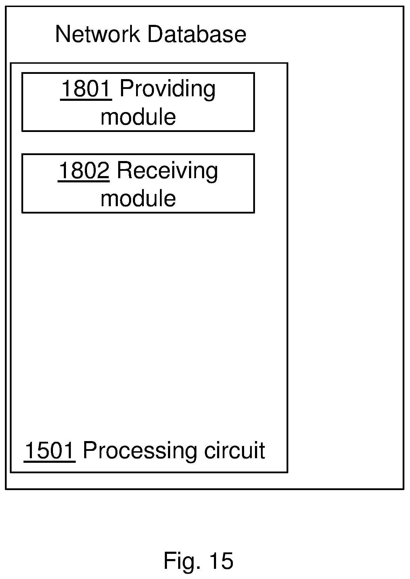

**Figure 15** discloses a network database for enabling mobility, between a first access network 100 and a second access network 200, of a wireless terminal 120. The network database comprises the processing circuit 1501 configured to provide a radio node or the wireless terminal 120 with information whether an application or service supports application or service mobility used at the radio node or the wireless terminal 120 when determining whether to initiate or to allow a mobility process, between the wireless telecommunications network and the Wi-Fi network, of the wireless terminal 120 based on retrieved information. E.g. the network database may comprise **a providing module 1801** configured to provide a radio node or the wireless terminal 900 with information whether an application or service supports application or service mobility used at the radio node or the wireless terminal 120 when determining whether to initiate or to allow a mobility process, between the first access network 100 and the second access network 200, of the wireless terminal 120 based on retrieved information.

The processing circuit 1501 may further be configured to perform the providing upon receiving a request from a radio node and/or a wireless terminal 120. E.g. the providing module 1801 may be configured to perform the providing upon receiving, over a **receiving module 1802,** a request from a radio node and/or a wireless terminal 120.

The network database may be a stand-alone unit or integrated in a network node.

Those skilled in the art will also appreciate that the various "circuits" or "modules" described may refer to a combination of analogue and digital circuits, and/or one or more processors configured with software and/or firmware (e.g., stored in memory) that, when executed by the one or more processors, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

## Claims

1. A method in a radio node (110, 210, 220, 601, 602) for handling mobility, between a first access network (100) and a second access network (200) of a different type, of a wireless terminal (120, 121, 701), comprising
- *collecting* (502) information of an on-going application or service for the wireless terminal (120, 121, 701), and being **characterized by** further comprising:
- *retrieving* (503) from a network database (603) or from the terminal (120, 900) information whether the on-going application or service supports application or service mobility comprising an Internet Protocol address change of the wireless terminal; and
- *deciding* (504) to initiate or allow a mobility process, between the first access network (100) and the second access network (200), of the wireless terminal (120, 121, 701) based on the retrieved information.

2. A method according to claim 1, further comprising
- *detecting* (501) a parameter indicating initiation or control of the mobility process.

3. A method according to claim 2, wherein the *detecting* (501) comprises receiving from a network node (110, 210, 220, 601, 602) or the wireless terminal (120, 121, 701), an indication of an attempt of the wireless terminal (120, 121, 701) to access one of the first and second access networks or receiving a measurement report indicating initiation of the mobility process.

4. A method according to any of claims 1-3, wherein the first access network (100) is a cellular radio network and the second access network (200) is a Wi-Fi network.

5. A method according to any of claims 1-4, wherein *collecting* (502) information comprises determining that a session of the application or service is active, and the information is retrieved from a network database (603).

6. A method according to any of claims 1-5, wherein the *deciding* (504) is further taking into account signal level thresholds of the first and the second access network to determine when to override a decision based on the retrieved information.

7. A method in a wireless terminal (120, 900) for handling mobility, between a first access network (100) and a second access network (200) of a different type, of the wireless terminal (120, 900), comprising
- *collecting* (902) information of an on-going application or service for the wireless terminal (120, 900),
and being **characterized by** further comprising:
- *retrieving* (903) from a network database (603) information whether the on-going application or service supports application or service mobility comprising an Internet Protocol address change of the wireless terminal; and
- *deciding* (904) whether to initiate a mobility process, between the first access network (100) and the second access network (200), of the wireless terminal (120, 900) based on the retrieved information.

8. A method according to claim 7, further comprising
- *detecting* (901) that a parameter indicating initiation of the mobility process.

9. A method according to claim 8, wherein the *detecting* (901) comprises detecting one of the first or second access networks, and wherein the first access network (100) is a cellular radio network and the second access network (200) is a Wi-Fi network.

10. A method according to any of the claims 7-9, wherein the *deciding* (904) further takes signal level thresholds of the first and the second access network into account to determine when to override a decision based on the retrieved information.

11. A method in a network database (603) for enabling mobility, between a first access network (100) and a second access network (200) of a different type, of a wireless terminal (120, 121, 701, 900), the method **characterized by** comprising:
- *providing* (1102) a radio node (110, 210, 220, 601, 602) or the wireless terminal (120, 121, 701, 900) with information whether an application or service supports application or service mobility comprising an Internet Protocol address change of the wireless terminal, to be used when determining whether to initiate or to allow a mobility process, between the first access network (100) and the second access network (200), of the wireless terminal (120, 121, 701, 900) based on retrieved information.

12. A method according to claim 11, wherein *providing* (1102) is performed upon *receiving* (1101) a request from a radio node (110, 210, 220, 601, 602) and/or a wireless terminal (120, 900).

13. A radio node (110, 210, 220, 601, 602) for handling mobility, between a first access network (100) and a second access network (200) of a different type, of a wireless terminal (120, 121, 701); the radio node (110, 210, 220, 601, 602) comprising a processing circuit (1301) configured to:
- collect information of an on-going application or service for the wireless terminal (120, 121, 701),
the radio node **characterized in that** the processing circuit is further configured to:
- retrieve from a network database (603) or from the terminal (120, 900) information whether the on-going application or service supports application or service mobility comprising an Internet Protocol address change of the wireless terminal; and to
- decide to initiate or allow a mobility process, between the first access network and the second access network, of the wireless terminal (120, 121, 701) based on retrieved information.

14. A wireless terminal (120, 900) for handling mobility, between a first access network (100) and a second access network (200) of a different type, of the wireless terminal (120,900), comprising a processing circuit (1401) configured to:
- collect information of an on-going application or service for the wireless terminal (120, 900),
the wireless terminal **characterized in that** the processing circuit is further configured to:
- retrieve from the network database (603) information whether the on-going application or service supports application or service mobility comprising an Internet Protocol address change of the wireless terminal; and to
- decide whether to initiate a mobility process, between the first access network (100) and the second access network (200), of the wireless terminal (120, 900) based on retrieved information.

15. A network database (603) for enabling mobility, between a first access network (100) and a second access network (200) of a different type, of a wireless terminal (120, 121, 701, 900), the network database comprising a processing circuit (1501), the network database **characterized by** being configured to:
- provide a radio node (110, 210, 220, 601, 602) or the wireless terminal (120, 900) with information whether an application or service supports application or service mobility comprising an Internet Protocol address change of the wireless terminal used at the radio node (110, 210, 220, 601, 602) or the wireless terminal (120, 900) when determining whether to initiate or to allow a mobility process, between the first access network and the second access network, of the wireless terminal (120, 121, 701, 900) based on retrieved information.

16. A computer program (2001) comprising instructions which, when executed on at least one processor, cause the at least one processor to carry out the method according to any one of claims 1 to 12.

17. A computer-readable storage medium (2002), having stored thereon a computer program, comprising instructions which, when executed on at least one processor, cause the at least one processor to carry out the method according to any one of claims 1 to 12.

## Patentansprüche

1. Verfahren in einem Funkknoten (110, 210, 220, 601, 602) zum Handhaben von Mobilität eines drahtlosen Endgeräts (120, 121, 701) zwischen einem ersten Zugangsnetzwerk (100) und einem zweiten Zugangsnetzwerk (200) einer anderen Art, das Folgendes umfasst:
- Sammeln (502) von Informationen einer laufenden Anwendung oder eines laufenden Dienstes für das drahtlose Endgerät (120, 121, 701),
und **dadurch gekennzeichnet, dass** es ferner Folgendes umfasst:
- Abrufen (503) aus einer Netzwerkdatenbank (603) oder aus dem Endgerät (120, 900) von Informationen darüber, ob die laufende Anwendung oder der laufende Dienst eine Anwendungs- oder Dienstmobilität unterstützt, die ein Verändern der Internetprotokolladresse des drahtlosen Endgeräts umfasst; und
- Entscheiden (504), einen Mobilitätsprozess des drahtlosen Endgeräts (120, 121, 701) zwischen dem ersten Zugangsnetzwerk (100) und dem zweiten Zugangsnetzwerk (200) auf der Basis der abgerufenen Informationen zu initiieren oder diesen zu ermöglichen.

2. Verfahren nach Anspruch 1, ferner umfassend
- Detektieren (501) eines Parameters, der ein Initiieren oder ein Steuern des Mobilitätsprozesses anzeigt.

3. Verfahren nach Anspruch 2, wobei das Detektieren (501) ein Empfangen von einem Netzwerkknoten (110, 210, 220, 601, 602) oder dem drahtlosen Endgerät(120, 121, 701) einer Anzeige eines Versuchs des drahtlosen Endgeräts (120, 121, 701) auf eines von dem ersten und dem zweiten Zugangsnetzwerk zuzugreifen oder ein Empfangen eines Messberichts, der ein Initiieren eines Mobilitätsprozesses anzeigt, umfasst.

4. Verfahren nach einem der Ansprüche 1-3, wobei das erste Zugangsnetzwerk (100) ein zellulares Funknetzwerk ist und das zweite Zugangsnetzwerk (200) ein WLAN-Netzwerk ist.

5. Verfahren nach einem der Ansprüche 1-4, wobei das Sammeln (502) von Informationen ein Bestimmen umfasst, dass eine Sitzung der Anwendung oder des Dienstes aktiv ist, und wobei die Informationen aus einer Netzwerkdatenbank (603) abgerufen werden.

6. Verfahren nach einem der Ansprüche 1-5, wobei das Entscheiden (504) ferner Signalniveauschwellenwerte des ersten und des zweiten Zugangsnetzwerks berücksichtig, um zu bestimmen, wann eine Entscheidung auf der Basis der abgerufenen Information überschrieben werden soll.

7. Verfahren in einem drahtlosen Endgerät (120, 900) zum Handhaben von Mobilität des drahtlosen Endgeräts (120, 900) zwischen einem ersten Zugangsnetzwerk (100) und einem zweiten Zugangsnetzwerk (200) einer anderen Art, wobei das Verfahren Folgendes umfasst:
- Sammeln (902) von Informationen einer laufenden Anwendung oder eines laufenden Dienstes für das drahtlose Endgerät (120, 900),
und **dadurch gekennzeichnet, dass** es ferner Folgendes umfasst:
- Abrufen (903) aus einer Netzwerkdatenbank (603) von Informationen darüber, ob die laufende Anwendung oder der laufende Dienst eine Anwendungs- oder Dienstmobilität unterstütz, die ein Verändern einer Internetprotokolladresse des drahtlosen Endgeräts umfasst; und
- Entscheiden (904), ob ein Mobilitätsprozess des drahtlosen Endgeräts (120, 900) zwischen dem ersten Zugangsnetzwerk (100) und dem zweiten Zugangsnetzwerk (200) initiiert auf der Basis der abgerufenen Informationen werden soll.

8. Verfahren nach Anspruch 7, ferner umfassend
- Detektieren (901), dass ein Parameter eine Initiierung des Mobilitätprozesses anzeigt.

9. Verfahren nach Anspruch 8, wobei das Detektieren (901) ein Detektieren von einem von dem ersten und dem zweiten Zugangsnetzwerk umfasst, und wobei das erste Zugangsnetzwerk (100) ein zellulares Funknetzwerk ist und das zweite Zugangsnetzwerk (200) ein WLAN-Netzwerk ist.

10. Verfahren nach einem der Ansprüche 7-9, wobei das Entscheiden (904) ferner Signalniveauschwellenwerte des ersten und des zweiten Zugangsnetzwerks berücksichtig, um zu bestimmen, wann eine Entscheidung auf der Basis der abgerufenen Informationen überschrieben werden soll.

11. Verfahren in einer Netzwerkdatenbank (603) zum Ermöglichen von Mobilität eines drahtlosen Endgeräts (120, 121, 701, 900) zwischen einem ersten Zugangsnetzwerk (100) und einem zweiten Zugangsnetzwerk (200) einer anderen Art, wobei das Verfahren **dadurch gekennzeichnet ist, dass** es Folgendes umfasst:
- Versehen (1102) eines Funkknotens (110, 210, 220, 601, 602) oder des drahtlosen Endgeräts (120, 121, 701, 900) mit Informationen darüber, ob eine Anwendung oder ein Dienst eine Anwendungs- oder Dienstmobilität unterstützt, die ein Verändern einer Internetprotokolladresse des drahtlosen Endgeräts umfasst, die verwendet werden sollen beim Bestimmen, ob ein Mobilitätsprozess des drahtlosen Endgeräts (120, 121, 701, 900) zwischen dem ersten Zugangsnetzwerk (100) und dem zweiten Zugangsnetzwerk (200) auf der Basis von abgerufenen Informationen initiiert oder ermöglicht werden soll.

12. Verfahren nach Anspruch 11, wobei das Versehen (1102) beim Empfangen (1101) einer Anforderung von einem Funkknoten (110, 210, 220, 601, 602) und/oder einem drahtlosen Endgerät (120, 900) durchgeführt wird.

13. Funkknoten (110, 210, 220, 601, 602) zum Handhaben von Mobilität eines drahtlosen Endgeräts (120, 121, 701) zwischen einem ersten Zugangsnetzwerk (100) und einem zweiten Zugangsnetzwerk (200) einer anderen Art; wobei der Funkknoten (110, 210, 220, 601, 602) eine Verarbeitungsschaltung (1301) umfasst, die zu Folgendem konfiguriert ist:
- Sammeln von Informationen einer laufenden Anwendung oder eines laufenden Dienstes für das drahtlose Endgerät (120, 121, 701),
wobei der Funkknoten **dadurch gekennzeichnet ist, dass** die Verarbeitungsschaltung ferner zu Folgendem konfiguriert ist:
- Abrufen aus einer Netzwerkdatenbank (603) oder aus dem Endgerät (120, 900) von Informationen darüber, ob die laufende Anwendung oder der laufende Dienst eine Anwendungs- oder Dienstmobilität unterstützt, die ein Verändern einer Internetprotokolladresse des drahtlosen Endgeräts unterstützt, und zum
- Entscheiden, einen Mobilitätsprozess des drahtlosen Endgeräts (120, 121, 701) zwischen dem ersten Zugangsnetzwerk und dem zweiten Zugangsnetzwerk auf der Basis der abgerufenen Informationen zu initiieren oder zu ermöglichen.

14. Drahtloses Endgerät (120, 900) zum Handhaben von Mobilität des drahtlosen Endgeräts (120, 900) zwischen einem ersten Zugangsnetzwerk (100) und einem zweiten Zugangsnetzwerk (200) einer anderen Art, wobei das drahtlose Endgerät eine Verarbeitungsschaltung (1401) umfasst, die zu Folgendem konfiguriert ist:
- Sammeln von Informationen einer laufenden Anwendung oder eines laufenden Dienstes für das drahtlose Endgerät (120, 900),
wobei das drahtlose Endgerät **dadurch gekennzeichnet ist, dass** die Verarbeitungsschaltung ferner zu Folgendem konfiguriert ist:
- Abrufen aus der Netzwerkdatenbank (603) von Informationen darüber, ob die laufende Anwendung oder der laufende Dienst eine Anwendungs- oder Dienstmobilität unterstützt, die ein Verändern einer Internetprotokolladresse des drahtlosen Endgeräts umfasst; und zum
- Entscheiden, ob ein Mobilitätprozess des drahtlosen Endgeräts (120, 900) zwischen dem ersten Zugangsnetzwerk (100) und dem zweiten Zugangsnetzwerk (200) auf der Basis der abgerufenen Informationen initiiert werden soll.

15. Netzwerkdatenbank (603) zum Ermöglichen von Mobilität eines drahtlosen Endgeräts (120, 121, 701, 900) zwischen einem ersten Zugangsnetzwerk (100) und einem zweiten Zugangsnetzwerk (200) einer anderen Art, wobei die Netzwerkdatenbank eine Verarbeitungsschaltung (1501) umfasst, wobei die Netzwerkdatenbank **dadurch gekennzeichnet ist, dass** sie zu Folgendem konfiguriert ist:
- Versehen eines Funkknotens (110, 210, 220, 601, 602) oder des drahtlosen Endgeräts (120, 900) mit Informationen darüber, ob eine Anwendung oder ein Dienst eine Anwendungs- oder Dienstmobilität unterstützt, die ein Verändern einer Internetprotokolladresse des drahtlosen Endgeräts umfasst, die beim Bestimmen, ob ein Mobilitätsprozess des drahtlosen Endgeräts (120, 121, 701, 900) zwischen dem ersten Zugangsnetzwerk und dem zweiten Zugangsnetzwerk auf der Basis von abgerufenen Informationen initiiert oder ermöglicht werden soll, in dem Funkknoten (110, 210, 220, 601, 602) oder dem drahtlosen Endgerät (120, 900) verwendet werden sollen.

16. Computerprogramm (2001), das Anweisungen umfasst, welche, wenn sie auf mindestens einem Prozessor ausgeführt werden, den mindestens einen Prozessor dazu veranlassen, das Verfahren nach einem der Ansprüche 1 bis 12 auszuführen.

17. Computerlesbares Speichermedium (2002), das ein darauf gespeichertes Computerprogramm aufweist, das Anweisungen umfasst, welche, wenn sie auf mindestens einem Prozessor ausgeführt werden, den mindestens einen Prozessor dazu veranlassen, das Verfahren nach einem der Ansprüche 1 bis 12 auszuführen.

## Revendications

1. Procédé dans un noeud radio (110, 210, 220, 601, 602) pour gérer la mobilité, entre un premier réseau d'accès (100) et un second réseau d'accès (200) d'un type différent, d'un terminal sans fil (120, 121, 701), comprenant :
- la collecte (502) d'informations d'une application ou d'un service en cours pour le terminal sans fil (120, 121, 701),
et qui est **caractérisé en ce qu'**il comprend en outre :
- la récupération (503) à partir d'une base de données de réseau (603) ou à partir du terminal (120, 900) d'informations relatives au fait que l'application ou le service en cours prend ou non en charge une mobilité d'application ou de service comprenant un changement d'adresse de protocole Internet du terminal sans fil ; et
- la décision (504) d'initier ou d'autoriser un processus de mobilité, entre le premier réseau d'accès (100) et le second réseau d'accès (200), du terminal sans fil (120, 121, 701) sur la base des informations reçues.

2. Procédé selon la revendication 1, comprenant en outre
- la détection (501) d'un paramètre indiquant une initiation ou un contrôle du processus de mobilité.

3. Procédé selon la revendication 2, dans lequel la détection (501) comprend la réception à partir d'un noeud de réseau (110, 210, 220, 601, 602) ou du terminal sans fil (120, 121, 701) d'une indication d'une tentative du terminal sans fil (120, 121, 701) visant à accéder à l'un parmi le premier et le second réseau d'accès ou la réception d'un rapport de mesure indiquant un démarrage du processus de mobilité.

4. Procédé selon l'une quelconque des revendications 1 à 3, dans lequel le premier réseau d'accès (100) est un réseau radio cellulaire et le second réseau d'accès (200) est un réseau Wifi.

5. Procédé selon l'une quelconque des revendications 1 à 4, dans lequel la collecte (502) d'informations comprend la détermination qu'une session de l'application ou du service est active, et les informations sont récupérées à partir d'une base de données de réseau (603).

6. Procédé selon l'une quelconque des revendications 1 à 5, dans lequel la décision (504) prend en outre en compte des seuils de niveaux de signaux du premier et du second réseau d'accès pour déterminer à quel moment annuler une décision sur la base des informations reçues.

7. Procédé dans un terminal sans fil (120, 900) pour gérer la mobilité, entre un premier réseau d'accès (100) et un second réseau d'accès (200) d'un type différent, du terminal sans fil (120, 900), comprenant
- la collecte (902) d'informations d'une application ou d'un service en cours pour le terminal sans fil (120, 900),
et qui est **caractérisé en ce qu'**il comprend en outre :
- la récupération (903) à partir d'une base de données de réseau (603) d'informations relatives au fait que l'application ou le service en cours prend ou non en charge une mobilité d'application ou de service comprenant un changement d'adresse de protocole Internet du terminal sans fil ; et
- la décision (904) d'initier ou d'autoriser ou non un processus de mobilité, entre le premier réseau d'accès (100) et le second réseau d'accès (200), du terminal sans fil (120, 900) sur la base des informations récupérées.

8. Procédé selon la revendication 7, comprenant en outre
- la détection (901) d'un paramètre indiquant une initiation ou un contrôle du processus de mobilité.

9. Procédé selon la revendication 8, dans lequel la détection (901) comprend la détection d'un parmi le premier ou le second réseau d'accès, et dans lequel le premier réseau d'accès (100) est un réseau radio cellulaire et le second réseau d'accès (200) est un réseau Wifi.

10. Procédé selon l'une quelconque des revendications 7 à 9, dans lequel la décision (904) prend en outre en compte des seuils de niveaux de signaux du premier et du second réseau d'accès pour déterminer à quel moment annuler une décision sur la base des informations reçues.

11. Procédé dans une base de données de réseau (603) pour permettre une mobilité, entre un premier réseau d'accès (100) et un second réseau d'accès (200) d'un type différent, d'un terminal sans fil (120, 121, 701, 900), le procédé étant **caractérisé en ce qu'**il comprend :
- la fourniture (1102) d'un noeud radio (110, 210, 220, 601, 602) ou du terminal sans fil (120, 121, 701, 900) avec des informations relatives au fait que l'application ou le service en cours prend ou non en charge une mobilité d'application ou de service comprenant un changement d'adresse de protocole Internet du terminal sans fil, à utiliser lors de la détermination du fait qu'il convient ou non d'initier ou d'autoriser un processus de mobilité, entre le premier réseau d'accès (100) et le second réseau d'accès (200), du terminal sans fil (120, 121, 701, 900) sur la base d'informations récupérées.

12. Procédé selon la revendication 11, dans lequel la fourniture (1102) est menée à bien au moment de la réception (1101) d'une demande provenant d'un noeud radio (110, 210, 220, 601, 602) et/ou d'un terminal sans fil (120, 900).

13. Noeud radio (110, 210, 220, 601, 602) pour gérer une mobilité, entre un premier réseau d'accès (100) et un second réseau d'accès (200) d'un type différent, d'un terminal sans fil (120, 121, 701) ; le noeud radio (110, 210, 220, 601, 602) comprenant un circuit de traitement 1301) configuré pour :
- collecter des informations d'une application ou d'un service en cours pour le terminal sans fil (120, 121, 701),
le noeud radio est **caractérisé en ce que** le circuit de traitement est en outre configuré pour :
- récupérer à partir d'une base de données de réseau (603) ou à partir du terminal (120, 900) des informations relatives au fait que l'application ou le service en cours prend ou non en charge une mobilité d'application ou de service comprenant un changement d'adresse de protocole Internet du terminal sans fil ; et pour
- décider d'initier ou d'autoriser un processus de mobilité, entre le premier réseau d'accès et le second réseau d'accès, du terminal sans fil (120, 121, 701) sur la base d'informations reçues.

14. Terminal sans fil (120, 900) pour gérer une mobilité, entre un premier réseau d'accès (100) et un second réseau d'accès (200) d'un type différent, du terminal sans fil (120, 900), comprenant un circuit de traitement (1401) configuré pour :
- collecter des informations d'une application ou d'un service en cours pour le terminal sans fil (120, 900),
le terminal sans fil est **caractérisé en ce que** le circuit de traitement est en outre configuré pour :
- récupérer à partir de la base de données de réseau (603) des informations relatives au fait que l'application ou le service en cours prend ou non en charge une mobilité d'application ou de service comprenant un changement d'adresse de protocole Internet du terminal sans fil ; et pour
- décider s'il convient ou non d'initier un processus de mobilité, entre le premier réseau d'accès (100) et le second réseau d'accès (200), du terminal d'accès (120, 900) sur la base d'informations récupérées.

15. Base de données de réseau (603) pour permettre une mobilité, entre un premier réseau d'accès (100) et un second réseau d'accès (200) d'un type différent, d'un terminal sans fil (120, 121, 701, 900), la base de données de réseau comprenant un circuit de traitement (1501), la base de données de réseau étant **caractérisée en ce qu'**elle est configurée pour :
- fournir un noeud radio (110, 210, 220, 601, 602) ou fournir au terminal sans fil (120, 900) des informations relatives au fait qu'une application ou un service prend ou non en charge une mobilité d'application ou de service comprenant un changement d'adresse de protocole Internet du terminal sans fil utilisé au niveau du noeud radio (110, 210, 220, 601, 602) ou du terminal sans fil (120, 900) lors de la détermination du fait qu'il convient ou non d'initier ou d'autoriser un processus de mobilité, entre le premier réseau d'accès et le second réseau d'accès, du terminal sans fil (120, 121, 701, 900) sur la base d'informations retrouvées.

16. Programme informatique (2001) comprenant des instructions qui, lorsqu'elles sont exécutées sur au moins un dispositif de traitement, amènent l'au moins un dispositif de traitement à réaliser le procédé selon l'une quelconque des revendications 1 à 12.

17. Support de stockage lisible par ordinateur (2002), ayant stocké sur celui-ci un programme informatique, comprenant des instructions qui, lorsqu'elles sont exécutées sur au moins un dispositif de traitement, amènent l'au moins un dispositif de traitement à réaliser le procédé selon l'une quelconque des revendications 1 à 12.
